# FASCICULE DE BREVET EUROPEEN

(11) **EP 0 972 144 B1**
(45) Date de publication et mention de la délivrance du brevet: **02.05.2003**
(21) Numéro de dépôt: 99902611.5
(22) Date de dépôt: 05.02.1999
(51) Int. Cl.: F16D 13/75

(54) **MECANISME D'EMBRAYAGE A FRICTION COMPORTANT UN MODULE DE RATTRAPAGE D'USURE**
REIBUNGSKUPPLUNGSMECHANISMUS MIT EINER NACHSTELLVORRICHTUNGSEINHEIT
CLUTCH MECHANISM COMPRISING A WEAR TAKE-UP MODULE

(30) Priorité: 05.02.1998 FR 9801453; 14.12.1998 FR 9815770
(43) Date de publication de la demande: 19.01.2000
(73) Titulaire: VALEO EMBRAYAGES, 80009 Amiens Cedex 1 (FR)
(72) Inventeur: BLARD, Michel, F-92130 Issy-les-Moulineaux (FR); GRATON, Michel, F-75020 Paris (FR)
(74) Mandataire: Gamonal, Didier
(86) Numéro de dépôt international: FR9900263
(87) Numéro de publication internationale: WO99040337

(56) Documents cités:
- FR-A- 2 753 503
- FR-A- 2 753 758

## Description

La présente invention concerne un mécanisme d'embrayage à friction, notamment pour véhicule automobile, et se rapporte plus particulièrement à un embrayage équipé d'un dispositif de compensation de l'usure due notamment à l'usure de ou des garnitures de friction, ce dispositif, ci-après appelé dispositif de rattrapage d'usure, opérant au fur et à mesure de l'usure de ou des garnitures.

Un embrayage à friction classique comporte généralement un plateau de réaction appartenant à un volant moteur, éventuellement en deux parties pour formation d'un volant amortisseur ou d'un volant flexible, calé en rotation sur un premier arbre, usuellement un arbre menant tel que le vilebrequin du moteur à combustion interne, et supportant par sa périphérie externe un couvercle arrière auquel est attaché, avec mobilité axiale, au moins un plateau avant de pression.

Le plateau de pression est solidaire en rotation du couvercle et du plateau de réaction tout en pouvant se déplacer axialement sous la sollicitation de moyens embrayeurs à action axiale commandés par des moyens débrayeurs. Les moyens débrayeurs peuvent consister en des ressorts hélicoidaux, ou en deux rondelles Belleville montées en série, soumis à l'action de leviers de débrayage formant les moyens débrayeurs.

Généralement, les moyens embrayeurs et débrayeurs appartiennent à une même pièce, par exemple un diaphragme métallique prenant appui sur le couvercle Le diaphragme peut être monté en série ou en parallèle avec une rondelle Belleville pour assurer une assistance de l'effort de débrayage.

Un disque de friction, portant des garnitures de friction à sa périphérie externe, solidaire en rotation d'un arbre, usuellement un arbre mené tel que l'arbre d'entrée de la boîte de vitesses, est intercalé entre le plateau de pression et le plateau de réaction de façon à être serré entre eux lorsque l'embrayage est en position d'engagement pour transmettre le couple de l'arbre menant à l'arbre mené.

Classiquement les garnitures de friction sont montées sur un support axialement élastique accouplé de manière rigide ou élastique à un moyeu calé en rotation sur l'arbre mené. Grâce à cette disposition le disque de friction assiste le diaphragme lors de l'opération de débrayage de l'embrayage.

En variante, le support est noyé à sa périphérie externe dans une garniture de friction.

Classiquement les moyens embrayeurs, le couvercle et le plateau de pression appartiennent à un ensemble unitaire dit mécanisme d'embrayage à friction.

Les moyens embrayeurs commandent le déplacement axial du plateau de pression lorsqu'ils sont actionnés par une butée de débrayage par l'intermédiaire des moyens débrayeurs.

La butée de débrayage peut être commandée mécaniquement, hydrauliquement, électriquement ou éléctromécaniquement. La commande peut être du type manuel, automatique ou semi-automatique.

Au cours de la durée de vie d'un tel embrayage, la ou les garnitures de friction ainsi que les contre-matériaux, plateaux de pression et de réaction, s'usent, ce qui provoque une variation de la position axiale du plateau de pression, de celle des moyens embrayeurs à action axiale et de la butée de débrayage, d'où il s'ensuit une variation de la force de serrage axial entre le disque de friction, d'une part, et les plateaux de pression et de réaction, d'autre part, en raison des modifications des conditions de travail des moyens embrayeurs, et la force nécessaire pour débrayer s'en trouve affectée. En dotant un tel embrayage d'un dispositif de rattrapage d'usure, on évite ces inconvénients, les moyens embrayeurs, ainsi que la butée de débrayage, usuellement en appui constant sur les moyens débrayeurs, occupant la même position lorsque l'embrayage est en position d'engagement ce qui permet de réduire l'encombrement axial de l'embrayage de friction.

On a déjà proposé, selon le document US-A-5 090 536, de réaliser un dispositif de rattrapage en disposant entre le diaphragme et le plateau de pression deux bagues annulaires portant des rampes complémentaires, une première bague annulaire étant fixe en rotation par rapport au plateau de pression, la seconde étant déplaçable en rotation, par rapport à celui-ci et à la première, le déplacement relatif circonférentiel des deux bagues conduisant, du fait des rampes complémentaires qu'elles portent, à un écartement des bagues dans le sens axial compensant ladite usure, cet écartement simulant une augmentation de l'épaisseur axiale du plateau de pression ; pour son déplacement relatif en rotation, la seconde bague est munie à sa périphérie d'un secteur denté dont les dents engrènent avec une vis sans fin disposée de manière tangentielle et montée à rotation sur un axe porté par le couvercle de l'embrayage ; la vis sans fin est susceptible d'être entraînée en rotation, par l'intermédiaire d'un accouplement unidirectionnel, par un tambour porté par le même axe qui porte la vis sans fin, lequel tambour est, en cas d'usure des garnitures du disque de friction, entraîné lui-même en rotation ; l'accouplement unidirectionnel est disposé en sorte que la vis sans fin est entraînée par le tambour, qui constitue en quelque sorte une pièce d'armement du dispositif, lorsque celui-ci est lui-même entraîné en rotation lors du débrayage, la rotation de la vis sans fin conduisant à une rotation de la seconde bague, comme cela a été dit ci-dessus.

Un accouplement unidirectionnel disposé entre la vis sans fin et l'axe qui la supporte permet à celle-ci de conserver sa position en rotation après chaque réglage.

Un tel dispositif, selon le document US-A-5 090 536, présente les inconvénients suivants : la pièce d'armement, qui est portée par le couvercle de l'embrayage, est susceptible d'être entraînée en rotation par un levier lui-même commandé par la butée de débrayage ; dès lors, la butée de débrayage doit être spécifiquement adaptée à la commande dudit levier et est encombrante axialement ; par ailleurs, lorsque la butée de débrayage est amenée à être déplacée axialement au delà de la course juste nécessaire pour l'opération de débrayage, l'opération de rattrapage est effectuée alors qu'il n'y a pas eu usure, ce qui est dangereux car pouvant conduire à un blocage de l'embrayage qui finit par ne plus pouvoir être débrayé.

La demande de brevet français FR 2.753.503 (ou EP 0898662), non compris dans l'état de la technique, décrit et représente aux figures 21 à 26 un mécanisme d'embrayage à friction, notamment pour véhicule automobile, du type comportant un couvercle arrière 52, un plateau de pression avant 51 lié en rotation au couvercle 52 tout en pouvant se déplacer axialement par rapport à celui-ci, des moyens d'appui 14 portés par le plateau de pression 51, des moyens embrayeurs 53 à action axiale agissant entre le couvercle 52 et les moyens d'appui 14, et un dispositif de rattrapage d'usure.

Le dispositif de rattrapage d'usure comprend d'une part des moyens 54 à rampes 56 portant une denture externe 59 et placés entre le plateau de pression 51 et les moyens d'appui 14 pour constituer un plateau de pression 51, 54 d'épaisseur variable entre sa face de friction et les moyens d'appui 14 et comprend, d'autre part, une cassette portée par le couvercle 52 et qui comporte une pièce 62, solidaire du couvercle 52, formant support pour la fixation de la cassette sur le couvercle 52.

Le support 62 est globalement en forme de U avec une âme centrale 64 supérieure, en forme générale de plaque-horizontale, d'orientation globalement tangentielle et deux ailes latérales 65, 66 opposées dont chacune s'étend verticalement vers le bas dans un plan d'orientation axiale perpendiculaire à l'âme supérieure et dont chacune comporte un trou 61 pour le montage à rotation d'un équipage 67, 63, 60, la pièce 62 formant support comportant une patte avant de fixation 68 qui s'étend verticalement vers le haut dans un plan transversal perpendiculaire à l'axe général du mécanisme depuis un bord transversal avant de la plaque formant âme centrale 64 et qui est fixée par rivetage à un bord périphérique du couvercle 52.

L'équipage comporte notamment un axe portant une vis sans fin, une roue à rochet et un ressort hélicoïdal. Le support porte en outre un organe élastique doté, d'une part, d'une languette de commande et, d'autre part, d'un cliquet anti-retour.

La languette de commande est propre à être manoeuvrée par un actionneur appartenant aux moyens embrayeurs de l'embrayage et coopère, ainsi que le cliquet, avec les dents de la roue à rochet.

La vis sans fin coopère avec les dents d'une denture appartenant aux moyens à rampes réalisés sous la forme d'un anneau à rampes disposé axialement entre les moyens d'appui des moyens embrayeurs et le plateau de pression. La vis sans fin coopère avec la denture et avec des moyens d'entraînement en rotation, comprenant le ressort hélicoïdal, qui sont rendus opérationnels par l'usure des garnitures de friction lorsque l'embrayage est engagé. La vis sans fin est montée tangentiellement par rapport à sa denture associée.

Il est souhaitable d'assurer un bon maintien en position fixée de la cassette par l'intermédiaire de son support en U sans pour cela faire appel à des pattes supplémentaires de fixation par rivetage comme les pattes 69 illustrées aux figures 23 et 25 de ce même document.

Dans ce but, l'invention telle que définie dans la revendication indépendante propose un mécanisme d'embrayage du type de celui mentionné précédemment, caractérisé en ce que le support comporte au moins une patte de stabilisation d'orientation axiale qui s'étend vers l'arrière à travers une ouverture formée dans le couvercle et délimitée par au moins un bord horizontal d'appui d'orientation globalement tangentielle qui constitue une portée d'appui pour la patte de stabilisation.

Grâce à l'invention, le support est simplifié car la patte de stabilisation remplace des pattes de fixation de l'art antérieur. La cassette est stable. En outre, grâce à l'ouverture, on peut réduire l'encombrement du fait que le support pénètre dans l'ouverture. Ce support peut avoir ainsi une plus grande longueur en étant plus stable et robuste.

Selon d'autres caractéristiques de l'invention :
- le bord d'appui est un bord inférieur de l'ouverture et la patte de stabilisation est en appui vertical, par sa face inférieure, sur le bord horizontal inférieur d'appui pour avoir un support de longueur maximale, très stable et peut encombrant car il s'inscrit dans le contour de l'ouverture ;
- le bord horizontal inférieur d'appui est décalé, radialement vers l'intérieur, par rapport au plan de la plaque formant l'âme centrale supérieure pour augmenter encore la stabilité du support et de la cassette ;
- la patte de stabilisation s'étend depuis un bord transversal arrière de la plaque formant l'âme centrale supérieure dans le plan de cette dernière, puis est coudée successivement deux fois de manière que son tronçon d'extrémité libre arrière s'étende horizontalement dans un plan décalé radialement vers le bas pour réduire au maximum l'encombrement et s'inscrire dans le contour de l'ouverture ;
- la patte de stabilisation est une patte unique centrale et la pièce formant support comporte deux retours, agencés transversalement de manière opposée de part et d'autre de la patte centrale de stabilisation et dont chacun s'étend verticalement vers le bas à partir du bord transversal arrière de la plaque formant l'âme centrale supérieure, pour une répartition des efforts ;
- la patte de stabilisation s'étend horizontalement vers l'arrière à partir d'un bord vertical arrière de l'une des ailes latérales ;
- il est prévu deux pattes opposées de stabilisation dont chacune s'étend horizontalement vers l'arrière à partir d'un bord vertical arrière de l'une des ailes ;
- la cassette est montée dans un logement du couvercle délimité par un fond arrière, d'orientation transversale, et ladite ouverture est formée en partie dans le fond transversal arrière du logement ;
- ledit équipage qui comprend une vis sans fin, coopérant avec la denture des moyens à rampes sur laquelle est monté un axe transversal, d'orientation globalement tangentielle par rapport à l'axe central du mécanisme, traversant au moins un trou de l'une des ailes latérales du support, et qui comprend une roue à rochet solidaire axialement et en rotation de la vis sans fin, un moyen élastique de rattrapage agissant sur la roue à rochet, et un organe élastique doté d'une languette élastique de commande portée par un retour de l'organe élastique et doté d'un cliquet anti-retour qui sont propres à coopérer avec la roue à rochet ;
- la pièce formant support est une pièce en tôle découpée et pliée. Grâce à l'invention, on peut monter le support à la manière d'un tiroir dans l'ouverture et la languette élastique de commande est également simplifiée.

D'autres caractéristiques et avantages de l'invention apparaîtront à la lecture de la description détaillée qui suit pour la compréhension de laquelle on se reportera aux dessins annexés dans lesquels :
- la figure 1 est une vue de face d'un embrayage équipé d'un dispositif de rattrapage d'usure à cassette selon un premier mode de réalisation de l'invention, avec des arrachements partiels pour illustrer notamment la denture de l'anneau à rampes et les languettes tangentielles ;
- la figure 2A est une vue en coupe selon la ligne 2-2 de la figure 1 ;
- la figure 2B est une vue à plus grande échelle de la partie supérieure de la figure 2A ;
- la figure 3 est une vue de détail à plus grande échelle selon la flèche F3 de la figure 2A, avec un arrachement partiel et une coupe montrant l'immobilisation axiale de l'axe de la cassette ;
- la figure 4 est une vue simplifiée en perspective et à plus grande échelle, selon la flèche F4 de la figure 2A, qui illustre la partie correspondante du couvercle avec le support en U de la cassette du dispositif de réglage ;
- la figure 5 est une vue similaire à celle de la figure 2B qui illustre un deuxième mode de réalisation de l'invention ;
- les figures 6 et 7 sont des vues similaires à celles des figures 3 et 4 qui correspondent aux vues selon les flèches F6 et F7 de la figure 5 ; et
- les figures 8 à 10 sont des vues similaires à celles des figures 5 à 7 qui représentent un troisième mode de réalisation de l'invention.

Dans la description qui va suivre, des éléments et composants identiques, similaires ou analogues seront désignés par les mêmes chiffres de référence.

Pour simplifier la compréhension de la description et des revendications, on utilisera à titre non limitatif les termes horizontal, vertical, supérieur, inférieur, etc., notamment en référence aux figures.

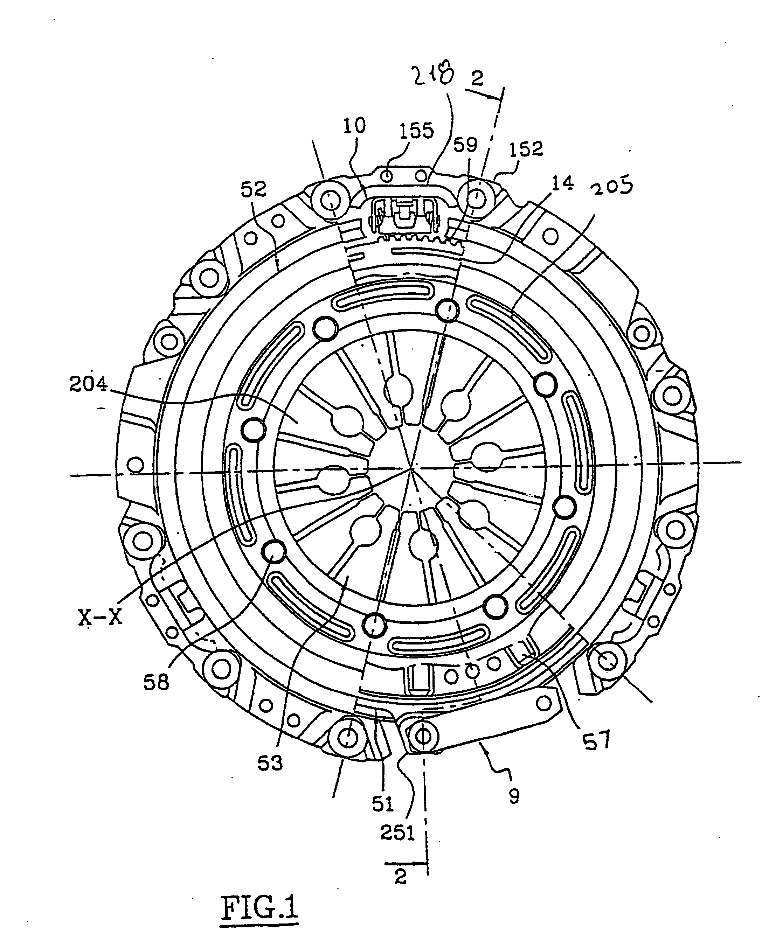

On décrira maintenant le premier mode de réalisation illustré aux figures 1 à 4.

Ces figures représentent un embrayage équipé d'un dispositif de rattrapage d'usure, du genre de celui décrit dans la demande de brevet FR 2753 503 ou EP 0898 662,
à laquelle il conviendra de se reporter pour plus de détails.

En se reportant aux figures, on voit un mécanisme d'embrayage à friction, notamment pour véhicule automobile, d'axe de symétrie axiale X-X, qui forme un ensemble unitaire et qui comprend un plateau de pression avant 51 destiné à coopérer avec un disque de friction, portant à sa périphérie externe des garnitures de friction, et qui coopère lui-même avec un plateau de réaction. Dans la partie basse de la figure 1, on aura représenté schématiquement, respectivement en 100 le disque de friction et en 101 le plateau de réaction. Le plateau de réaction est destiné à être calé en rotation sur un arbre menant, tel que le vilebrequin du moteur à combustion interne. Le disque de friction 100 est solidaire en rotation d'un arbre mené tel que l'arbre d'entrée de la boîte de vitesses.

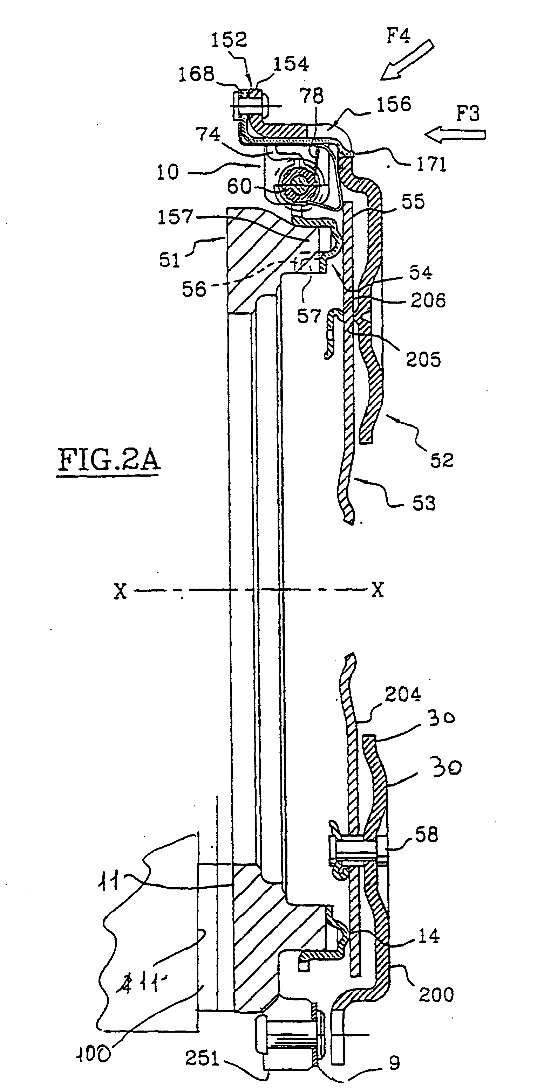

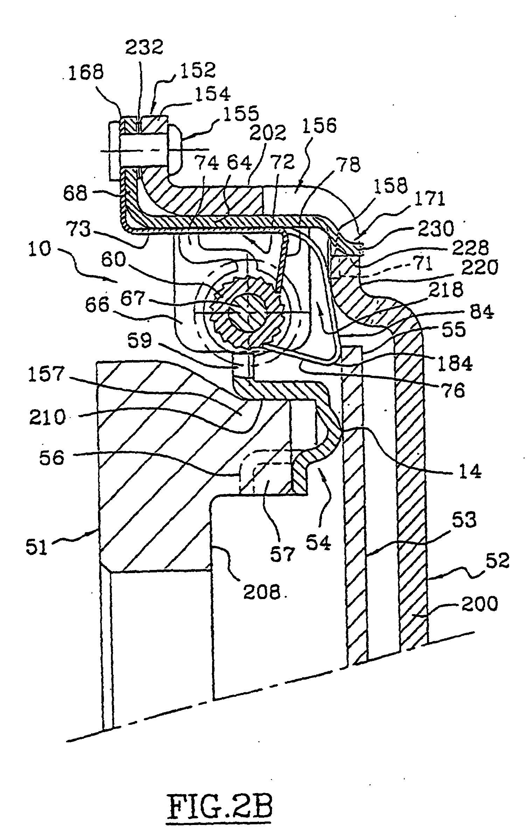

Le plateau de pression 51 est solidaire en rotation du couvercle 52 par l'intermédiaire de languettes tangentielles 9 dont une est visible sur les figures 1 et 2 et qui, élastiques axialement, constituent en même temps des moyens de rappel axial du plateau de pression 51 vers l'arrière en direction du fond transversal 200 du couvercle 52. En variante, les languettes 9 sont d'orientation radiale.

Dans tous les cas, les languettes 9 sont fixées par rivetage à l'une de leur extrémité au couvercle 52 et à leur autre extrémité à une patte 251 du plateau de pression (figure 2A, 2B).

Les languettes 9 autorisent un mouvement axial du plateau de pression 51 par rapport au couvercle 52. Le couvercle est métallique en étant en tôle emboutie tandis que les plateaux de pression et de réaction sont en fonte. Ce couvercle 52 comporte le fond, d'orientation transversale 200, troué centralement et des moyens 152 pour sa fixation à un plateau de réaction, éventuellement divisé pour formation d'un volant amortisseur.

Ici le couvercle 52 est globalement en forme d'assiette creuse et comporte à sa périphérie externe un rebord 152, d'orientation globalement transversale qui s'étend radialement vers l'extérieur dans un plan vertical perpendiculaire à l'axe X-X, formant notamment les moyens de fixation du couvercle 52 au plateau de réaction, ce rebord 152 étant doté de trous pour passage d'organes de fixation, tels que des vis, du couvercle au plateau de réaction 101.

Une jupe annulaire d'orientation axiale relie le fond 200 au rebord 152 et est ouverte au niveau des languettes 9.

Le plateau de réaction 101 peut être plat ou, en variante ce plateau présente une jupe sur laquelle se fixe le rebord 152 en sorte que le couvercle 52 peut être moins profond.

Le plateau de pression 51, tout en étant solidaire en rotation du couvercle 52, est donc déplaçable axialement par rapport au couvercle 52 sous la sollicitation de moyens embrayeurs à action axiale commandés par des moyens débrayeurs, ici un diaphragme 53 monté articulé sur le couvercle 52 grâce à des colonnettes 58 portées par le fond 200 du couvercle 52 troué centralement.

Le diaphragme 53, formant moyen élastique à action axiale, a une forme tronconique à l'état libre et comporte une partie périphérique en forme de rondelle Belleville prolongée vers le centre par une partie centrale fragmentée en doigts radiaux 204 par des fentes comme visible à la figure 1.

Le diaphragme 53 prend appui, par l'intermédiaire de sa rondelle Belleville, sur le fond 200 du couvercle pour action sur le plateau de pression 51 et serrage axial des garnitures de friction, que présente le disque de friction 100, entre les plateaux de pression et de réaction.

Ici l'embrayage est du type poussé, c'est-à-dire qu'il faut, à l'aide d'une butée de débrayage (non représentée), commandée manuellement ou de manière semi-automatique ou automatique et non représentée, agir en poussant sur l'extrémité interne des doigts du diaphragme 53 pour désengager (débrayer) l'embrayage. Pour ce faire (figure 2A, 2B), le fond du couvercle 52 porte, d'une part, un appui primaire 205 consistant par exemple en un jonc, ou ici en un embouti réalisé dans le fond du couvercle à la périphérie interne de celui-ci et, d'autre part, en regard de l'appui primaire, un appui secondaire 206 sous forme de couronne roulée portée par les colonnettes 58, ou tout autre moyen par exemple sous forme d'une rondelle tronconique portée par des pattes issues par découpe et pliage du fond du couvercle 52 et traversant des orifices élargis du diaphragme comme les colonnettes 58.

Le diaphragme 53, par la périphérie interne de sa rondelle Belleville, est monté de manière basculante ou pivotante entre lesdits appuis primaire 204 et secondaire 206. Par la périphérie externe de sa rondelle Belleville, il est en contact avec des zones d'appui 14, décrites ci-après. Ces zones 14, formant moyens d'appui, sont portées par le plateau de pression 51.

Pour maintenir, lorsque l'embrayage est embrayé, les moyens embrayeurs à action axiale 53 dans une position axiale indépendante de l'usure des garnitures du disque de friction, et dans une moindre mesure l'usure des plateaux de pression 51 et de réaction 100 dont les faces respectivement 11 et 111, dites de friction formant piste de frottement, s'usent au contact des garnitures du disque 100 , il est prévu un dispositif de rattrapage d'usure à rampes.

Le dispositif de rattrapage d'usure comprend une cassette 10 et des moyens à rampes 54 disposés circonférentiellement.

Plus précisément, ces moyens à rampes 54 sont constitués d'un anneau en tôle découpée et emboutie de façon à présenter des rampes 56 disposées circonférentiellement ; ledit anneau présente également des zones d'appui 14 constituées par l'arête supérieure arrondie d'emboutis en arcs de cercle centrés sur l'axe de l'embrayage et placés radialement à l'extérieur par rapport aux rampes 56.

Le plateau de pression 51 présente ici, venus de moulage, sur sa face transversale arrière 208 tournée vers le fond 200 du couvercle 52, radialement au-delà des colonnettes 58, des plots 57 répartis circonférentiellement à une distance l'un de l'autre qui correspond à celle qui sépare circonférentiellement deux rampes 56 successives, les plots 57 étant destinés à coopérer chacun avec une rampe 56.

L'anneau 54 à rampes 56 est placé axialement entre le diaphragme 53 et le plateau de pression 51 en sorte que les plots 57 reçoivent les rampes 56 et que le diaphragme 53 coopère avec les zones d'appui 14 qui constituent ainsi les moyens d'appui, ici fractionnés mais qui en variante peuvent être continus, par l'intermédiaire desquels le diaphragme 53 agit sur le plateau de pression 51. Cette disposition est économique et simple, les moyens à rampes 54 étant métalliques et obtenus par emboutissage. En variante les plots 57 sont remplacés par des contre-rampes de même forme que les rampes 54.

L'une au moins des zones d'appui 14 des moyens à rampes 54 est prolongée à sa périphérie externe par un rebord 210 parallèle à l'axe de l'embrayage se terminant selon un retour transversal, c'est-à-dire s'étendant dans un plan perpendiculaire à l'axe X-X de l'embrayage, muni à sa périphérie externe d'une denture 59, en sorte que les zones d'appui 14 peuvent être continues et que le rebord est centré par une surépaisseur 157 du plateau de pression 51, la denture étant ici d'un seul tenant avec des moyens 54 à rampes 56.

C'est dans chaque surépaisseur 157 que sont formés les plots 57. Toutes les surépaisseurs 157 peuvent participer au centrage de l'anneau 54 présentant un rebord continu.

Le dispositif de rattrapage d'usure comprend par ailleurs une roue à rochet 60 à dents inclinées solidaire d'un axe 67 qui porte également une vis sans fin 63. Le filet et le pas de la vis sans fin 63 sont adaptés à la denture 59. La vis sans fin 63 est amenée à coopérer avec la denture 59 dans les conditions qui seront décrites ci-après. La vis 63 s'étend tangentiellement par rapport à la denture.

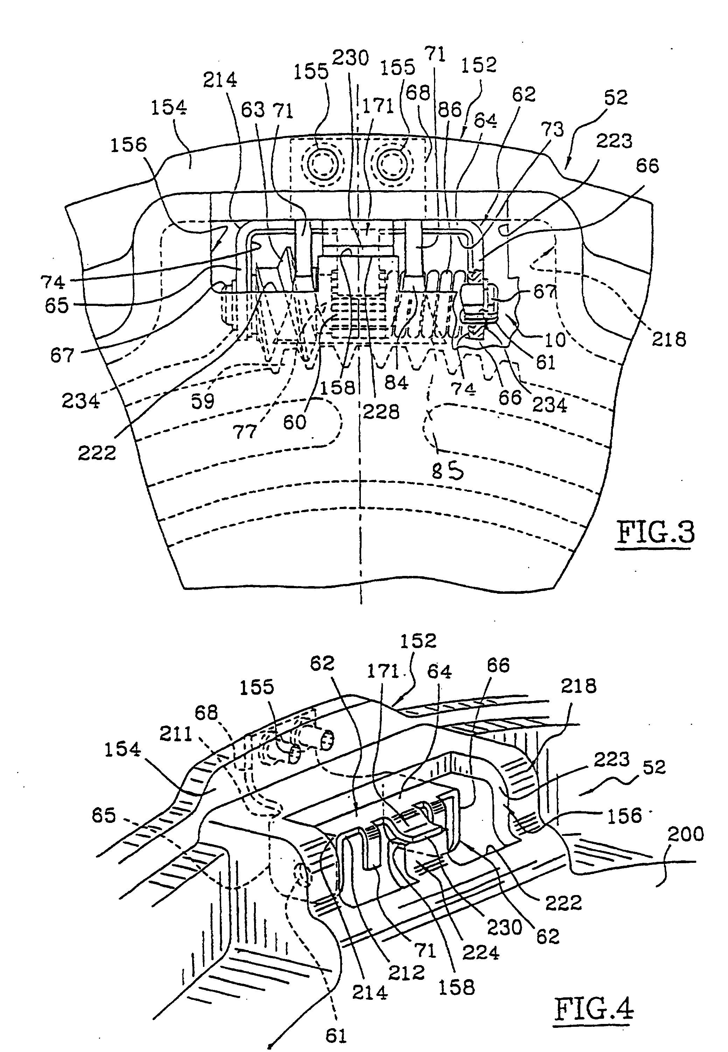

L'axe 67 de la roue à rochet 60 est porté à rotation par un support 62, mieux visible aux figures 2A, 2B, 3, en tôle découpée et pliée, en forme générale de U ayant une âme supérieure horizontale 64 en forme de plaque d'orientation tangentielle, et ayant deux ailes latérales opposées 65,66 destinées à supporter l'axe 67. A cet effet, chacune des ailes porte un trou circulaire 61 adapté à le recevoir.

Chaque aile latérale s'étend verticalement vers le bas dans un plan vertical parallèle à l'axe X-X à partir d'un bord latéral d'orientation axiale 214 de la plaque 64.

La plaque supérieure 64 comporte une patte avant de fixation 68, à l'équerre et dirigée radialement vers l'extérieur, qui est destinée à être fixée sur une plage 154 du rebord externe 152 du couvercle 52 par deux rivets 155.

Plus précisément, la patte avant 68 de fixation par rivetage est une patte centrale unique qui s'étend verticalement vers le haut à partir du bord transversal avant 212 de la plaque 64 dans un plan transversal.

Conformément aux enseignements de l'invention, il est prévu des moyens complémentaires de stabilisation du support 62 de la cassette 10 qui sont constitués ici par une patte de stabilisation 171. Il est ainsi réalisé une diminution du nombre de pattes de fixation et une simplification du support.

A cet effet, le couvercle 52 présente une ouverture 156 pour le passage de la patte de stabilisation 171 qui prolonge l'âme 64 axialement vers l'arrière.

Plus précisément, la cassette est aménagée dans un logement 218 en surépaisseur du couvercle 52 délimité par un fond arrière 220 d'orientation transversale On notera que la périphérie externe du plateau de pression 51 est entaillée localement pour le logement de la cassette 10 et réduction de l'encombrement axial. Bien entendu le logement 218 est formé en surépaisseur, ici par déformation à la presse, au niveau de la plage 154 de rebord 152 du couvercle 52 pour montage de la cassette 10.

Le logement 218 est délimité par la plage 154 solidaire d'une âme d'orientation centrale (non référencée) dont l'extrémité opposée à la plage 154 est dotée de l'ouverture 156. Ici, trois logements 218 sont prévu (figure 1) et un seul sert au logement de la cassette.

L'ouverture 156 est délimitée par un bord horizontal inférieur 222 à partir duquel s'étend une patte centrale d'appui 224 qui est d'orientation radiale vers l'extérieur et décalée axialement vers l'avant par rapport au fond transversal 220 de manière que son bord supérieur d'extrémité libre 158 constitue un bord d'appui pour la portion en vis-à-vis de la face inférieure 228 du tronçon d'extrémité libre 230 de la patte de stabilisation 171.

L'ouverture 156 est aussi délimitée transversalement par deux bords latéraux verticaux et opposés 223.

La patte de stabilisation 171 du mode de réalisation des figures 1 à 4 est coudée deux fois en S de manière que le plan horizontal dans lequel s'étend son tronçon d'extrémité libre 230 soit décalé vers le bas, radialement vers l'intérieur, par rapport au plan de l'âme 64.

Ainsi, l'âme 64, d'orientation axiale, s'appuie sur le bord 158 de l'ouverture 156 affectant le fond du couvercle 52. On peut fixer la patte de stabilisation 171 de l'âme 64 sur le bord 158 appartenant au fond du couvercle 52, par exemple par collage, soudage ou sertissage.

Dans le cas d'une fixation par sertissage de la patte 171 de l'âme 64 est épaulée et traverse une entaille réalisée dans le rebord 158. Après traversée du rebord, les extrémités latérales de l'âme sont écrasées à chaud pour réaliser le sertissage.

L'âme 64 du support 62 présente, à partir de son bord transversal arrière 212 côté opposé au bord transversal avant 211 à partir duquel s'étend la patte de fixation 68, deux retours 71 s'étendant globalement perpendiculairement à l'âme 64, radialement vers l'intérieur en direction de l'axe X-X, et destinés à constituer des butées de contrôle dont le rôle apparaîtra ci-dessous. Les extrémités des retours 71 sont à une distance transversale suffisante l'une de l'autre pour permettre, sans le gêner, le débattement de l'actionneur 55 lors des opérations d'embrayage et de débrayage.

L'actionneur 55 est constitué par une protubérance (ou appendice) que comporte le diaphragme 53 radialement en saillie à sa périphérie externe.

En pratique les retours 71 sont issus par découpe et pliage de l'âme 64 et sont disposés ainsi transversalement de part et d'autre de la patte axiale 171.

Le support 62 est ainsi de forme simple et est stable.

Il est beaucoup plus simple que celui décrit dans le document précité car il n'est fait appel à aucune patte supplémentaire de fixation par rivetage.

On réduit grâce à l'invention le nombre de pattes de fixation au couvercle.

Compte tenu de l'ouverture 156 affectant le couvercle 52 au niveau de la zone de raccordement de la jupe du couvercle au fond du couvercle, le soudage, le collage ou le sertissage de la patte 171 au bord 158 de l'ouverture est aisé. Cette solution permet d'allonger l'âme 64 du support 62, ici en tôle emboutie, sans augmenter l'encombrement car le support (figure 2) est implanté dans l'épaisseur du couvercle 52 à la faveur de l'ouverture 156 en forme de fenêtre.

Le support 62 est adapté à recevoir un organe élastique 72.

Ici, l'organe élastique 72, mieux visible sur la figure 2A, 2B est en forme de cavalier et comprend un corps 73 plan allongé portant à chacune de ses extrémités un bras latéral 74 muni d'un trou adapté à recevoir l'axe 67. Les deux bras 74 sont parallèles et s'étendent du même côté et globalement perpendiculairement par rapport au corps en forme de plaque supérieure horizontale 73.

Sur son bord transversal arrière, le corps 73 se prolonge selon une extension en oblique 84 du même côté que celui où sont placés les bras 74.

L'extrémité libre de l'extension élastique 84 est munie d'un retour 85 en forme de barre transversale qui se prolonge selon une languette de commande 76 s'étendant en direction du corps 73 en étant globalement parallèle à celui-ci.

Une découpe 77 est ménagée dans l'extension 84 et, à la faveur de cette découpe 77 et d'échancrures dans le corps 73, est réalisé un cliquet anti-retour 78 en forme de lame. L'extrémité libre du cliquet 78 s'étend globalement perpendiculairement au corps 73 c'est-à-dire radialement vers l'intérieur.

Ici comme mieux visible à la figure 2A, 2B, la languette de commande 76 et le cliquet 78 sont légèrement inclinés respectivement par rapport au plan du corps 73 et au plan perpendiculaire au plan du corps 73.

Le cliquet 78 est décalé par rapport à la languette 76, les extrémités libres du cliquet 78 et de la languette 76 étant décalées circonférentiellement.

Un ressort hélicoïdal 86 de compression est placé entre la roue à rochet 60 et l'extrémité libre du bras 74, en étant enroulé autour de l'axe 67 ; la vis sans fin 63 et la roue à rochet 60 sont taillées dans une même pièce.

La roue à rochet 60 est implantée entre la vis 63 et le ressort 86 qui constitue le moyen élastique de rattrapage. La roue à rochet 60 est au droit du cliquet anti-retour 78 qui, par coopération avec les dents inclinées de la roue à rochet 60, empêche la roue à rochet 60 de tourner, ainsi que la vis sans fin 63, dans le sens contraire à celui des aiguilles d'une montre, par rapport à la figure 2A, 2B.

Le support 62, portant la roue à rochet 60, la vis sans fin 63 et le ressort hélicoïdal 86, étant solidaire du couvercle 52, le diaphragme 53 se déplace par rapport à lui lors des opérations de débrayage et de réembrayage.

Le diaphragme 53 porte à sa périphérie l'appendice radial (ou protubérance radiale), dit actionneur 55, s'étendant radialement à l'extérieur de la partie rondelle Belleville du diaphragme 53 pour coopérer avec l'extension 84 de l'organe élastique 72, plus précisément avec une zone arrondie 184 raccordant la partie principale de l'extension 84 à la lame 76.

On comprendra que, grâce à cette disposition, lors du basculement du diaphragme 53 lors des opérations de débrayage et de réembrayage, l'actionneur 55 déplace l'extension 84 de la droite vers la gauche, par rapport à la figure 1, et la languette de commande 76, par coopération avec les dents de la roue à rochet 60, est amenée à faire tourner la roue à rochet 60 dans le sens horaire et donc à faire tourner la vis 63 en comprimant le ressort 86.

Lorsque l'actionneur 55, au retour (opération de débrayage), est déplacé de la gauche vers la droite, l'élasticité de l'extension 84 de l'organe élastique 72 et l'inclinaison des dents font que la languette 76 se déplace vers la droite en montant sur les dents qui sont maintenues fixes en rotation par le cliquet anti-retour 78.

Le fonctionnement du dispositif de rattrapage de jeu qui vient d'être décrit est connu et ne sera pas détaillé. Si besoin est, on pourra se reporter à la demande de brevet français 96 11 297 déjà citée dont la partie de la description correspondante doit être considérée comme faisant partie de la présente demande, sachant que lors de l'opération de débrayage la course de retour ou d'armement de la languette de commande 76 est limitée par venue en butée de l'extension 84, plus précisément de la zone arrondie 184, contre les retours 71 du support 62 plus épais que l'organe 72, les retours 71 ayant pour rôle de ménager l'organe élastique 72.

Ici, la vis sans fin 63 et la roue à rochet 60 sont par exemple d'une seule pièce traversée par l'axe 67 porté par le support 62. L'axe 67 traverse les trous 61 des ailes 65 et 66 du support 62 et les bras 74 présentent une extrémité libre en forme de rondelle trouée.

Une des rondelles 74 est interposée axialement entre la face interne de l'aile 65 et l'extrémité libre de la vis sans fin 63, s'étendant ici sur moins de deux tours, ici 1/25 de tours, tandis que l'autre rondelle 174 est interposée entre la face interne de l'aile 66 et l'extrémité libre du ressort hélicoïdal 86.

Comme on peut le voir sur la figure 3, l'axe 67 qui traverse les ailes latérales est immobilisée axialement par l'intermédiaire de deux anneaux élastiques fendus 234, aussi appelés circlips, qui sont reçus dans des gorges correspondantes formées aux extrémités opposées de l'axe 67.

Il est ainsi formé de manière unitaire une cassette 10 manipulable et transportable comportant des pièces, ici toutes métalliques, à savoir le support 62, l'organe élastique 72, le ressort hélicoïdal 86, la. roue à rochet 60, la vis sans fin 63 et l'axe 67, sachant que l'organe élastique 72 (figure 2A, 2B) comporte une patte 168 d'orientation radiale accolée à la patte 68 du support 62. Le corps 73 est accolé à l'âme 64. La patte 168 présente, comme la patte 68, deux trous pour le passage de rivets de fixation 155.

Conformément à un aspect de l'invention, une cale d'épaisseur variable 232 peut être interposée entre la patte de fixation 68 et le rebord 152, 154 pour régler la position axiale de la cassette 10 dans son logement 218 et donc par rapport à l'actionneur 55 en fonction des tolérances de fabrication et des dispersions dimensionnelles des différents composants du mécanisme d'embrayage.

Bien entendu l'organe élastique 72, ici métallique, est d'épaisseur inférieure à celle du support 62 afin de rendre souple le cliquet 78 et la languette de commande 76 qui peut présenter centralement un bossage grâce auquel toutes les contraintes mécaniques sont ramenées vers le centre de la languette 76 en sorte que la languette 76 est moins fragile. Cette disposition permet d'augmenter la durée de vie de la languette 76, le bossage 76 étant un embouti.

L'axe 67, et donc l'ensemble monobloc vis 63 - roue 60 peut être incliné pour un bon contact avec la denture de la denture 59, ici en forme de secteur, et la vis sans fin. Toutes les solutions décrites dans le document FR98/01453 dont la priorité est revendiquée, sont envisageables et considérées comme annexées à la présente invention.

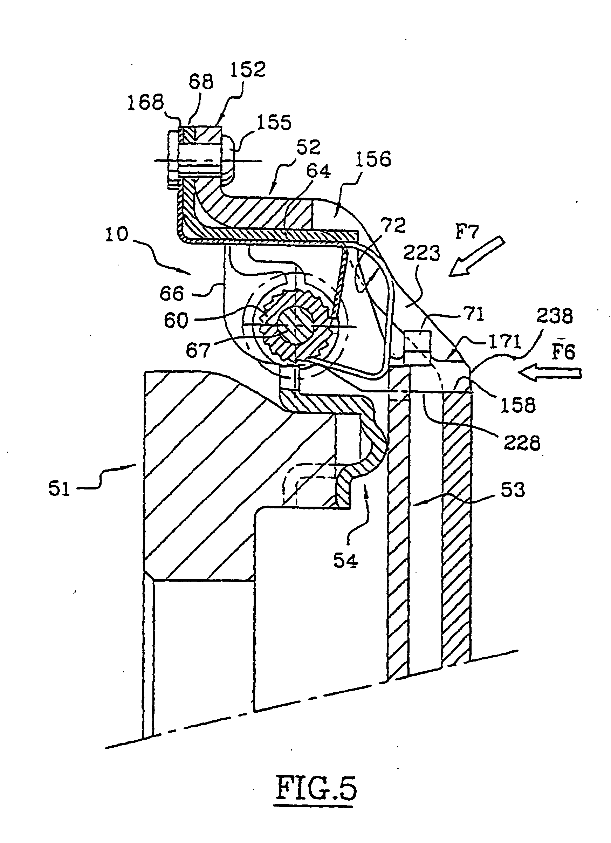

Dans le deuxième mode de réalisation illustré aux figures 5 à 7, le support 62 de la cassette comporte ici deux pattes de stabilisation 171 qui sont agencées transversalement de manière opposée et dont chacune s'étend axialement vers l'arrière à partir du bord vertical arrière 236 d'une aile latérale 65, 66 dans le plan vertical de cette dernière.

Les extrémités libres 238 des pattes de stabilisation 171 sont chanfreinées et leurs faces inférieures 228 sont en appui vertical contre le bord inférieur rectiligne 158 de l'ouverture 156 qui constitue la surface d'appui pour les pattes de stabilisation 171.

Les retours 71 s'étendent ici transversalement vers l'intérieur, chacun à partir du bord supérieur 238, d'orientation axiale, d'une patte 171.

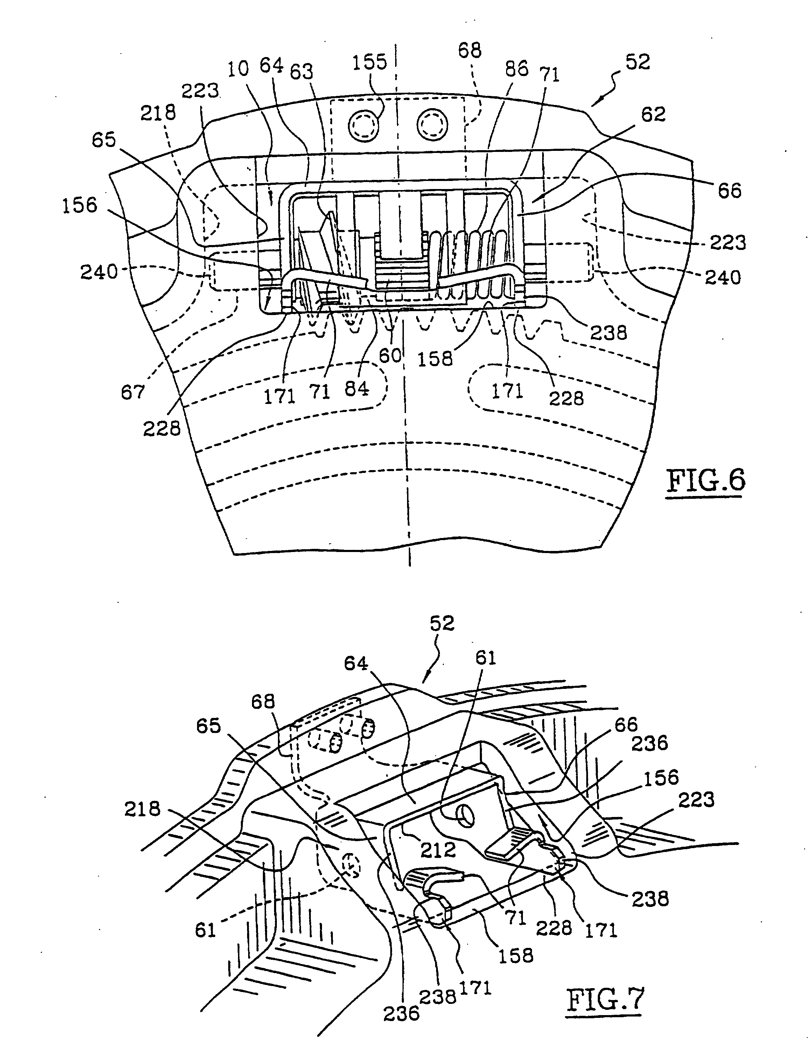

L'axe 67 de l'équipage porté par le support 62 est ici retenu selon la direction tangentielle par les faces latérales verticales du logement 218, comme on peut le voir notamment à la figure 6.

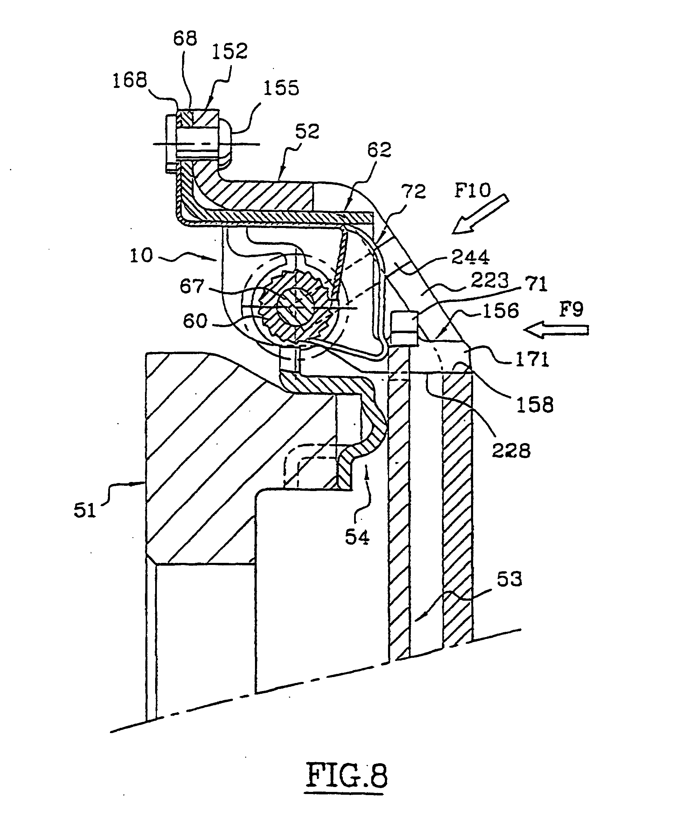

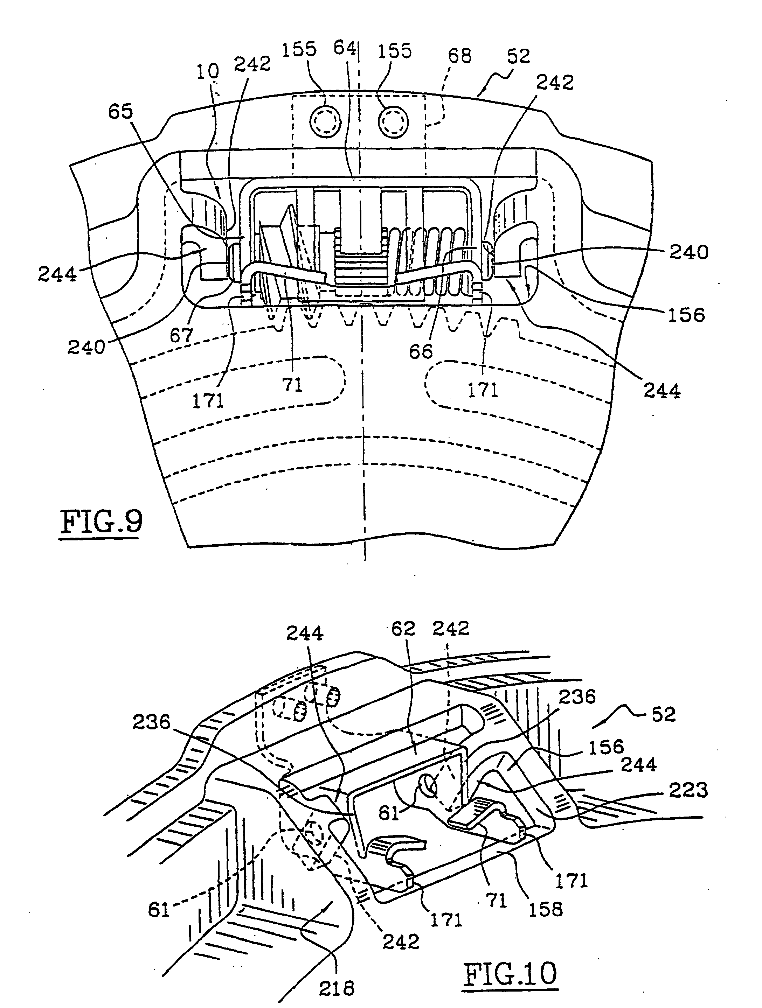

On décrira maintenant le troisième mode de réalisation illustré aux figures 8 à 10 qui diffère du deuxième mode de réalisation décrit précédemment uniquement par les moyens prévus pour retenir l'axe 67 selon la direction transversale.

En effet, chacune des extrémités axiales opposées 240 de l'axe 67 s'étend en regard d'une face d'orientation verticale 242 appartenant à une patte d'immobilisation 244 qui est réalisée venue de matière avec le couvercle 52.

Plus précisément, comme on peut le voir sur les figures, chaque patte 244 s'étend à partir d'un bord latéral vertical 223 de l'ouverture 156 tout d'abord transversalement vers l'intérieur selon une direction tangentielle puis est coudée à 90° pour s'étendre dans un plan vertical en oblique d'arrière en avant.

Les pattes 244 peuvent être réalisées par découpe, emboutissage et pliage avant la mise en place de la cassette 10, ce qui permet d'utiliser une cassette 10 standard pour différents mécanismes d'embrayage.

Les pattes 244 peuvent aussi être mises dans leur conformation finale illustrée sur les figures après le montage de la cassette 10 pour immobiliser l'axe 67.

Le support 62 est très stable dans tous les cas. Bien entendu, l'invention n'est pas limitée à l'exemple de réalisation décrit. Ainsi, comme dans le document FR 2783580, non compris dans l'état de la technique, la denture 59 peut ne pas être d'un seul tenant avec les moyens à rampes 54. Une pièce intermédiaire calée axialement sur le couvercle 52, par exemple à l'aide de prolongement radiaux de deux languettes 9 d'un même jeu, peut porter la denture. Cette pièce est liée en rotation avec les moyens à rampes, qui peuvent se déplacer axialement par rapport à la pièce intermédiaire, par exemple par une liaison à coopération de formes ou par des languettes de même forme que les languettes 9. Grâce à cette disposition, la présence d'un cliquet anti-retour n'est plus indispensable. Pour plus de précisions , on se reportera à ce document. Ici, le fond 200 du couvercle 52 présente à sa périphérie interne une partie bombée 300 avec une périphérie interne en forme d'anneau 301 d'orientation transversale. Les doigts 204 du diaphragme 53 ont une forme sinueuse à la périphérie interne.

Ainsi, en position de stockage, c'est-à-dire avant montage du mécanisme d'embrayage à friction sur le plateau de réaction ou une pièce solidaire du plateau de réaction, les doigts 204 du diaphragme viennent en contact avec l'anneau 301 ce qui permet de ménager la cassette.

Ici, les doigts 204 viennent en contact avec l'anneau 301 radialement au delà de leur forme sinueuse

Le couvercle 52 peut être du type standard et servir à un mécanisme d'embrayage non doté de dispositif de rattrapage d'usure. Pour cela il suffit d'enlever la partie bombée.

Bien entendu, on peut protéger la cassette 10 en prévoyant une pièce de support que l'on enlève après montage du mécanisme comme décrit dans le document FR 2775038, auquel on se reportera pour plus de précisions et qui n'est pas compris dans l'état de la technique.

La cassette 10 ne comporte pas forcément de moyens élastiques de rattrapage 86. Ceux-ci peuvent intervenir par exemple entre les plots 57 et les rampes 56.

On appréciera que la cassette se monte par enfilage axial dans le logement, avant sa fixation.

Bien entendu, on peut supprimer la patte 68. En effet, le logement 218 est limité par une paroi supérieure horizontale 202 d'orientation tangentielle dont la face inférieure constitue la face supérieure d'appui pour l'âme 64 en sorte qu'il est possible de fixer par rivetage l'âme 64 contre la face inférieure de la paroi 202, les-dits rivets servant également à fixer l'organe élastique 72 ainsi simplifié comme décrit dans le document FR 2787157, non compris dans l'état de technique.

On appréciera que grâce à l'invention l'organe élastique est simplifié mais qu'il comporte moins de pattes de fixation.

## Revendications

1. Mécanisme d'embrayage à friction du type comportant un couvercle arrière (52), un plateau de pression avant (51) lié en rotation au couvercle (52) tout en pouvant se déplacer axialement par rapport à celui-ci, des moyens d'appui (14) portés par le plateau de pression (51), des moyens embrayeurs (53) à action axiale agissant entre le couvercle (52) et les moyens d'appui (14), et un dispositif de rattrapage d'usure comprenant d'une part des moyens (54) à rampes (56) solidaires en rotation portant une denture externe (59) et placés entre le plateau de pression (51) et les moyens d'appui (14) pour constituer un plateau de pression (51, 54) d'épaisseur variable entre sa face de friction (11) et les moyens d'appui (14) et comprenant, d'autre part, une cassette (10) portée par le couvercle (52) et qui comporte une pièce (62), solidaire du couvercle (52), formant support globalement en forme de U avec une âme centrale (64) supérieure, en forme générale de plaque horizontale, d'orientation globalement tangentielle et deux ailes latérales (65, 66) opposées dont chacune s'étend verticalement vers le bas dans un plan d'orientation axiale perpendiculaire à l'âme supérieure et dont chacune comporte un trou (61) pour le montage à rotation d'un équipage (67, 63, 60), la pièce (62) formant support comportant une patte avant de fixation (68) qui s'étend verticalement vers le haut dans un plan transversal perpendiculaire à l'axe général (X-X) du mécanisme depuis un bord transversal avant (211) de la plaque formant âme centrale (64) et qui est fixée par rivetage (155) à un bord périphérique (152, 154) du couvercle (52), dans lequel le support (62) comporte au moins une patte de stabilisation (171) d'orientation axiale qui s'étend vers l'arrière à travers une ouverture (156) formée dans le couvercle (52, 218) et délimitée par au moins un bord horizontal d'appui (158, 222) d'orientation globalement tangentielle qui constitue une portée d'appui pour la patte de stabilisation (171).

2. Mécanisme selon la revendication précédente, dans lequel le bord d'appui (158) est un bord inférieur de l'ouverture (156) et en ce que la patte de stabilisation (171) est en appui vertical, par sa face inférieure (228), sur le bord horizontal inférieur d'appui (158, 222).

3. Mécanisme selon la revendication précédente, dans lequel le bord horizontal inférieur d'appui (158) est décalé, radialement vers l'intérieur, par rapport au plan de la plaque formant l'âme centrale supérieure (64).

4. Mécanisme selon la revendication précédente, dans lequel la patte de stabilisation (171) s'étend depuis un bord transversal arrière (212) de la plaque formant l'âme centrale supérieure (64) dans le plan de cette dernière, puis est coudée successivement deux fois de manière que son tronçon d'extrémité libre arrière (230) s'étende horizontalement dans un plan décalé radialement vers le bas.

5. Mécanisme selon la revendication précédente, dans lequel la patte de stabilisation (171) est une patte unique centrale et en ce que la pièce formant support comporte deux retours (71), agencés transversalement de manière opposée de part et d'autre de la patte centrale de stabilisation et dont chacun s'étend verticalement vers le bas à partir du bord transversal arrière (212) de la plaque formant l'âme centrale supérieure (64).

6. Mécanisme selon la revendication 4, dans lequel la patte de stabilisation (171) s'étend horizontalement vers l'arrière à partir d'un bord vertical arrière (236) de l'une des ailes latérales (65, 66).

7. Mécanisme selon la revendication 6, dans lequel : il est prévu deux pattes opposées de stabilisation (171) dont chacune s'étend horizontalement vers l'arrière à partir d'un bord vertical arrière (236) de l'une des ailes latérales (65, 66).

8. Mécanisme selon la revendication 1, dans lequel la cassette (10, 62) est montée dans un logement (218) du couvercle (52) délimité par un fond arrière (220), d'orientation transversale, et en ce que ladite (156) ouverture est formée en partie dans le fond transversal arrière (220) du logement (218).

9. Mécanisme d'embrayage selon la revendication 1, dans lequel ledit équipage qui comprend une vis sans fin (63), coopérant avec la denture (59) des moyens (54) à rampes (56) sur laquelle est monté un axe transversal (67), d'orientation globalement tangentielle par rapport à l'axe central (X-X) du mécanisme, traversant au moins un trou (61) de l'une des ailes latérales (65, 66) du support, et qui comprend une roue à rochet (60) solidaire axialement et en rotation de la vis sans fin (63), un moyen élastique (86) de rattrapage agissant sur la roue à rochet (60), et un organe élastique (72) doté d'une languette élastique de commande (76) portée par un retour de l'organe élastique (72) et doté d'un cliquet anti-retour (78) qui sont propres à coopérer avec la roue à rochet (60).

10. Mécanisme selon la revendication 1, dans lequel la pièce formant support (62) est une pièce en tôle découpée et pliée.

11. Mécanisme selon la revendication 1, dans lequel la denture (59) est d'un seul tenant avec les moyens (54) à rampes (56).

## Claims

1. A clutch friction mechanism, of the type comprising a posterior cover plate (52), an anterior pressure plate (51) which is coupled in rotation to the cover plate (52) while being displaceable axially with respect to the latter, abutment means (14) carried by the pressure plate (51), axially acting declutching means (53) for working between the cover plate (52) and abutment means (14), and a wear compensating device comprising, firstly, ramp means (54) having ramps (56) coupled in rotation, carrying an external set of teeth and located between the pressure plate (51) and abutment means (14), whereby to constitute a pressure plate (51, 54) having variable thickness between its friction face (11) and the abutment means (14), and comprising, secondly, a cassette (10) which includes a generally U-shaped support member (62) fixed to the cover plate (52) and having at the top a central spine portion (64) which has the general form of a horizontal plate oriented generally tangentially, together with two opposed lateral wing portions (65, 66), each of which extends vertically downwards in an axially oriented plane at right angles to the spine portion at the top, each wing portion having a hole (61) for the rotatable mounting therein of a rider (67, 63, 60), the support member including an anterior fastening lug (68) which extends vertically upwards in a transverse plane at right angles to the general axis (X-X) of the mechanism, from an anterior transverse edge (211) of the plate that constitutes the central spine portion (64) and which is secured by riveting (155) to a peripheral edge (152, 154) of the cover plate (52), wherein the support (62) includes at least one axially oriented stabilising lug (171) which extends towards the rear through an aperture (156) formed in the cover plate (52, 218) and delimited by at least one horizontal abutment edge (158, 222) which is oriented generally tangentially and which constitutes an engagement surface for the stabilising lug (171).

2. A mechanism according to the preceding Claim, wherein the abutment edge (158) is a lower edge of the aperture (156), and wherein the stabilising lug (171) is in vertical engagement, through its lower face (28), on the horizontal lower abutment edge (158, 222).

3. A mechanism according to the preceding Claim, wherein the horizontal lower abutment edge (158) is offset radially inwardly with respect to the plane of the plate that constitutes the central spine portion (64) at the top.

4. A mechanism according to the preceding Claim, wherein the stabilising lug (171) extends from a posterior transverse edge (212) of the plate that constitutes the central spine portion (64) at the top, in the plane of the latter, and is then bent twice in succession in such a way that its free posterior end portion (230) lies horizontally in a plane which is offset radially downwards.

5. A mechanism according to the preceding Claim, wherein the stabilising lug (171) is a single central lug, and wherein the support member includes two fingers (71) which are disposed in transversely opposed positions on either side of the central stabilising lug, and each of which extends vertically downwards from the posterior transverse edge (212) of the plate that constitutes the central spine portion (64) at the top.

6. A mechanism according to Claim 4, wherein the stabilising lug (171) extends horizontally towards the rear from a vertical posterior edge (236) of one of the lateral wing portions (65, 66).

7. A mechanism according to Claim 6, wherein two opposed stabilising lugs (171) are provided, ,with each of them extending horizontally towards the rear from a posterior vertical edge (236) of one of the lateral wing portions (65, 66).

8. A mechanism according to Claim 1, wherein the cassette (10, 62) is mounted in a housing (218) in the cover plate (52) which is delimited by a transversely oriented posterior base portion (22), and wherein the said aperture (156) is formed partly in the posterior transverse base portion (220) of the housing (218).

9. A mechanism according to Claim 1, wherein the said rider, which includes a worm (63), which is in cooperation with the set of teeth (59) of the means (54) having the ramps (156) and on which a transverse spindle (67) is mounted in an orientation which is generally tangential with respect to the central axis (X-X) of the mechanism, the spindle extending through at least one hole (61) in one of the lateral wing portions (65, 66) of the support member, the rider including a ratchet wheel (60) which is fixed to the worm (63) both axially and in rotation, with a resilient take-up means (86) acting on the ratchet wheel (60), and a resilient member (72) having an elastic control tongue (76) defined by a bent-up portion of the resilient member (72), and further having a non-return pawl (78), the control tongue and pawl being arranged to cooperate with the ratchet wheel (60).

10. A mechanism according to Claim 1, wherein the support member (62) is a component made by press-forming and bending.

11. A mechanism according to Claim 1, wherein the set of teeth (59) is integral with the means (54) having the ramps (56).

## Patentansprüche

1. Reibungskupplungsmechanismus, umfassend einen hinteren Deckel (52), eine vordere Druckplatte (51), die drehfest mit dem Deckel (52) verbunden ist, wobei sie sich im Verhältnis zu diesem axial verschieben kann, an der Druckplatte (51) angebrachte Auflagemittel (14), axial wirksame Einrückmittel (53), die zwischen dem Deckel (52) und den Auflagemitteln (14) wirken, und eine Verschleißnachstellvorrichtung, die einerseits drehfeste Rampenmittel (54) mit Rampen (56) umfasst, die eine Außenzahnung (59) tragen und zwischen der Druckplatte (51) und den Auflagemitteln (14) angeordnet sind, um eine Druckplatte (51, 54) mit veränderlicher Dicke zwischen ihrer Reibfläche (11) und den Auflagemitteln (14) zu bilden, und die andererseits eine Kassette (10) umfasst, die am Deckel (52) angebracht ist und die ein fest mit dem Deckel (52) verbundenes Teil (62) enthält, das einen allgemein U-förmigen Träger mit einem oberen Mittelsteg (64) mit der allgemeinen Form einer insgesamt tangential ausgerichteten horizontalen Platte und zwei gegenüberliegenden Seitenschenkeln (65, 66) bildet, die sich jeweils vertikal nach unten in einer zum oberen Steg senkrechten, axial ausgerichteten Ebene erstrecken und die jeweils ein Loch (61) für die drehbare Lagerung einer Baugruppe (67, 63, 60) enthalten, wobei das als Träger ausgebildete Teil (62) einen vorderen Befestigungsansatz (68) umfasst, der sich vertikal nach oben in einer zur Gesamtachse (X-X) des Mechanismus senkrechten Querebene von einer vorderen Querkante (211) der den Mittelsteg (64) bildenden Platte aus erstreckt und der durch Aufnieten (155) an einer Umfangskante (152, 154) des Deckels (52) befestigt ist, wobei der Träger (62) wenigstens einen axial ausgerichteten Stabilisierungsansatz (171) umfasst, der sich nach hinten durch eine Öffnung (156) erstreckt, die im Deckel (52, 218) ausgebildet ist und durch wenigstens eine insgesamt tangential ausgerichtete horizontale Auflagekante (158, 222) begrenzt wird, die eine Auflagefläche für den Stabilisierungsansatz (171) bildet.

2. Mechanismus nach dem vorangehenden Anspruch, wobei die Auflagekante (158) eine Unterkante der Öffnung (156) ist und dass der Stabilisierungsansatz (171) durch seine Unterseite (228) vertikal auf der unteren horizontalen Auflagekante (158, 222) zur Auflage kommt.

3. Mechanismus nach dem vorangehenden Anspruch, wobei die untere horizontale Auflagekante (158) im Verhältnis zur Ebene der den oberen Mittelsteg (64) bildenden Platte radial nach innen versetzt ist

4. Mechanismus nach dem vorangehenden Anspruch, wobei sich die Stabilisierungsplatte (171) von einer hinteren Querkante (212) der den oberen Mittelsteg (64) bildenden Platte aus in deren Ebene erstreckt, woraufhin sie anschließend zweimal nacheinander abgewinkelt ist, so dass sich ihr hinterer freier Endabschnitt (230) horizontal in einer radial nach unten versetzten Ebene erstreckt.

5. Mechanismus nach dem vorangehenden Anspruch, wobei der Stabilisierungsansatz (171) ein einziger mittlerer Ansatz ist und wobei das den Träger bildende Teil zwei Rücksprünge (71) umfasst, die gegenüberliegend beiderseits des mittleren Stabilisierungsansatzes angeordnet sind und die sich jeweils vertikal nach unten von der hinteren Querkante (212) der den oberen Mittelsteg (64) bildenden Platte aus erstrecken.

6. Mechanismus nach Anspruch 4, wobei sich der Stabilisierungsansatz (171) horizontal nach hinten von einer vertikalen Hinterkante (236) eines der Seitenschenkel (65, 66) aus erstreckt.

7. Mechanismus nach Anspruch 6, wobei zwei gegenüberliegende Stabilisierungsansätze (171) vorgesehen sind, die sich jeweils horizontal nach hinten von einer vertikalem Hinterkante (236) eines der Seitenschenkel (65, 66) aus erstrecken.

8. Mechanismus nach Anspruch 1, wobei die Kassette (10, 62) in einer Aufnahme (218) des Deckels (52) gelagert ist, die durch einen quer ausgerichteten hinteren Boden (220) begrenzt wird, und wobei die besagte Öffnung (156) teilweise im hinteren Querboden (220) der Aufnahme (218) ausgebildet ist.

9. Kupplungsmechanismus nach Anspruch 1, wobei die besagte Baugruppe eine Schnecke (63) umfasst, die mit der Zahnung (59) der Rampenmittel (54) mit Rampen (56) zusammenwirkt, an der eine im Verhältnis zur Mittelachse (X-X) des Mechanismus insgesamt tangential ausgerichtete Querachse (67) gelagert ist, die wenigstens durch ein Loch (61) eines der Seitenschenkel (65, 66) des Trägers hindurchgeht, und wobei sie ein axial fest und drehfest mit der Schnecke (63) verbundenes Spenzahnrad (60), ein auf das Sperrzahnrad (60) einwirkendes elastisches Nachstellmittel (86) und ein elastisches Organ (72) umfasst, das mit einer an einem Rücksprung des elastischen Organs (72) angebrachten Betätigungszunge (76) und mit einer Sperrklinke (78) versehen ist, die mit dem Sperrzahnrad (60) zusammenwirken können.

10. Mechanismus nach Anspruch 1, wobei das als Träger dienende Teil (62) ein Teil aus gestanztem und gebogenem Blech ist.

11. Mechanismus nach Anspruch 1, wobei die Zahnung (59) einstückig mit den Rampenmitteln (54) mit Rampen (56) ausgeführt ist.
